# EUROPEAN PATENT APPLICATION

(11) **EP 3 518 211 A1**
(43) Date of publication of application: **31.07.2019**
(21) Application number: 18207494.8
(22) Date of filing: 21.11.2018
(51) Int. Cl.: G08G 5/00, G01C 23/00

(54) **CONTEXT-BASED TASK DISPLAY ON A MAP**

(30) Priority: 24.01.2018 US 201815878934
(71) Applicant: Sikorsky Aircraft Corporation, Stratford, CT 06615 (US)
(72) Inventor: Lampazzi, Margaret M., Oxford, CT Connecticut 06478 (US); Sahay, Prateek, Acton, MA Massachusetts 01720 (US); Ward, Mark Daniel, Milford, CT Connecticut 06460 (US); Cherepinsky, Igor, Sandy Hook, CT Connecticut 06482 (US)
(74) Representative: Schmitt-Nilson Schraud Waibel Wohlfrom Patentanwälte Partnerschaft mbB

(57) **Abstract**

A processing system for displaying tasks on a map based on context of the tasks includes a mission decomposition module to decompose a mission into a plurality of tasks; a flight planning module to generate a flight plan. The processing system further includes a display to display the task interface to at least one user. The task interface includes the flight plan overlaid on a map and an indicium associated with at least one of the plurality of tasks. The indicium is positioned along the flight plan based at least in part on when the at least one of the plurality of tasks is to be performed. The processing system further includes a flight control system to execute the at least one of the plurality of tasks.

## Description

This invention was made with government support under HR0011-17-9-0004 awarded by the Defense Advanced Research Projects Agency (DARPA). The government has certain rights in the invention.

The subject matter disclosed herein relates to task display, and more particularly, to displaying tasks on a map based on the context of the tasks.

Autonomous systems are implemented in vehicles, such as air vehicles, to enable the vehicles to operate with a reduced number of crew or operators. Autonomous systems can include a vehicle autonomy management system that decomposes a mission into tasks and allocates them between flight assist agents (e.g., a flight control system) and the flight crew (e.g., a pilot or other crew).

According to one embodiment of the invention, a processing system for displaying a task interface includes: a mission decomposition module to decompose a mission into a plurality of tasks; a flight planning module to generate a flight plan; a display to display the task interface to at least one user, wherein the task interface comprises the flight plan overlaid on a map and an indicium associated with at least one of the plurality of tasks, and wherein the indicium is positioned along the flight plan based at least in part on when the at least one of the plurality of tasks is to be performed; and a flight control system to execute the at least one of the plurality of tasks.

In addition to one or more of the features described above, or as an alternative, the interface further includes a plurality of indicia, each of the plurality of indicia being associated with one of the plurality of tasks.

In addition to one or more of the features described above, or as an alternative, the processing system further includes at least one assist agent to perform tasks.

In addition to one or more of the features described above, or as an alternative, the assist agent is an autopilot system.

In addition to one or more of the features described above, or as an alternative, the wherein the mission decomposition module allocates the plurality of tasks between the at least one user and the at least one assist agent.

In addition to one or more of the features described above, or as an alternative, the at least one of the plurality of tasks includes a plurality of subtasks.

In addition to one or more of the features described above, or as an alternative, the mission is a flight mission and wherein the processing system is located on an aircraft.

In addition to one or more of the features described above, or as an alternative, the indicium is a color.

In addition to one or more of the features described above, or as an alternative, the indicium is a shape.

In addition to one or more of the features described above, or as an alternative, the display receives an input from the at least one user, and wherein the input causes the flight control system to perform the at least one of the plurality of tasks.

According to another embodiment, a computer-implemented method for displaying a task interface includes: receiving, by a processing device, a flight plan for a mission; decomposing, by the processing device, the flight plan into a plurality of tasks associated with the mission; displaying, on a display, the task interface to at least one user, wherein the task interface comprises the flight plan overlaid on a map and a plurality of indicia, wherein each of the plurality of indicia is associated with one of the plurality of tasks, and wherein each of the plurality of indicia is positioned along the flight plan; and performing at least one of the plurality of tasks.

In addition to one or more of the features described above, or as an alternative, the plurality of indicia are colors.

In addition to one or more of the features described above, or as an alternative, the plurality of indicia are shapes.

In addition to one or more of the features described above, or as an alternative, the plurality of indicia are icons representative of the plurality of tasks.

In addition to one or more of the features described above, or as an alternative, the mission is a flight mission and wherein the processing device is located on an aircraft.

In addition to one or more of the features described above, or as an alternative, the display receives an input from the at least one user, and wherein the input causes a flight control system to perform the at least one of the plurality of tasks.

Additional technical features and benefits are realized through the techniques of the present invention. Embodiments and aspects of the invention are described in detail herein and are considered a part of the claimed subject matter. For a better understanding, refer to the detailed description and to the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 depicts a perspective view of an example of a rotary wing aircraft according to aspects of the present disclosure;
FIG. 2 depicts a block diagram of a flight control system of an aircraft according to aspects of the present disclosure;
FIG. 3 depicts a block diagram of a flight control system of an aircraft according to aspects of the present disclosure;
FIG. 4 depicts a diagram of an interface according to aspects of the present disclosure;
FIG. 5 depicts a diagram of an interface according to aspects of the present disclosure;
FIG. 6 depicts a diagram of an interface according to aspects of the present disclosure;
FIG. 7 depicts a diagram of indicia for tasks according to aspects of the present disclosure;
FIG. 8 depicts a diagram of an interface according to aspects of the present disclosure;
FIG. 9 depicts a diagram of an interface according to aspects of the present disclosure; and
FIG. 10 depicts a flow diagram of a method for displaying an interface according to aspects of the present disclosure.

The detailed description explains embodiments of the invention, together with advantages and features, by way of example with reference to the drawings.

The present disclosure provides the design concepts and methods for representation, display, and visualization of a mission into its representative set of mission functional task elements. A mission (e.g., a cargo drop mission, a bombing mission, etc.) can be decomposed into discrete task elements. For example, a mission planning system can assign tasks to different human operators, autonomous agents, and combinations thereof and can determine whether a task is displayed to an operator. For example, tasks that represent system monitoring tasks that occur in the background may or may not be displayed to an operator (e.g., a system monitoring tasks is not displayed to an operator unless an exception occurs).

Existing task display techniques may not provide sufficient context to a user. For example, a timeline of tasks does not present the tasks to a user in such a way that the tasks can easily be understood in the context of the flight plan without the operator mentally correlating the tasks with the flight plan. A list of tasks is similarly deficient in that it fails to provide context about the tasks to the user.

The present disclosure provides an interface for managing and displaying tasks. The interface organizes tasks to present information to a user in a way that makes sense for human cognition. For example, the interface places tasks as icons or other visual indicia on a depicted flight plan that is presented to an operator. The tasks are positioned on the flight plan representative of a time and location whether each task will occur in space. This provides the operator with context as to where and when tasks will (or needs to) be performed.

Once tasks meet criteria for display, the interface of the present disclosure uses a flight plan to display the tasks on a digital map to give context to the tasks. According to aspects of the present disclosure, the flight plan with tasks displayed on a map provides a primary reference for each of the tasks and not only provides position context but also, to a certain extent, provides a time context as well. For example, it can be determined by observing the map and flight plan about when a task will/should occur. Arranging the tasks on the flight plan also enables viewing the distribution of tasks in real-time. This provides additional context to an operator by visually representing where and when the tasks will/should occur. Tasks are shown as indicia, such as icons, at a representative location on the flight plan in which the task will/should occur. Tasks can be identified as occurring autonomously, manually, or some combination thereof.

According to aspects of the present disclosure, the tasks can be categorized into the following task categories: aviate, navigate, communicate, system monitoring/control, checklists, and mission configuration.

Aviate tasks represent any change in configuration (e.g., changes to the flight trajectory, changes in aircraft configuration, landing gear deployment, etc.). Navigate tasks represent tasks associated with the location of the aircraft in three-dimensional space and how it is traveling through that space. Navigate tasks encompasses many activates associated with the flight path. Communicate tasks represent tasks that constitute communications, such as radio communication external to the aircraft, internal communications between operators, between autonomous systems and an operator, etc. System monitoring/control tasks, including emergency responses, represent tasks that involve autonomous monitoring and/or control of aircraft systems or sub-systems as well as emergency response tasks (e.g., a response to a failure). Checklist tasks represent aircraft checklist tasks, such as initiation of checklists, completion of checklists, etc. Mission configuration tasks represent tasks that relate to the configuration of mission-specific items, such as weapons, sensors, etc.

Example embodiments of the disclosure include or yield various technical features, technical effects, and/or improvements to technology. For instance, example embodiments of the disclosure provide the technical effect of decomposing a mission into discrete task elements and presenting the tasks along a flight plan (i.e., flight path) on a map to provide contextual information about the tasks, such as when the task should occur. As a result, user error is reduced by offloading some user tasks to assist agents, by presenting the tasks to a user in a contextually useful way, and by presenting the tasks at times when they are expected to occur. The present techniques improve safety and operational efficiency, such as of an aircraft, by allocating some tasks to assist agents and by presenting the user(s) with a simplified, interactive interface. As a result of the aforementioned technical features and technical effects, example embodiments of the disclosure constitute an improvement to the existing mission and task allocation and to vehicles, such as aircraft. It should be appreciated that the above examples of technical features, technical effects, and improvements to technology of example embodiments of the disclosure are merely illustrative and not exhaustive.

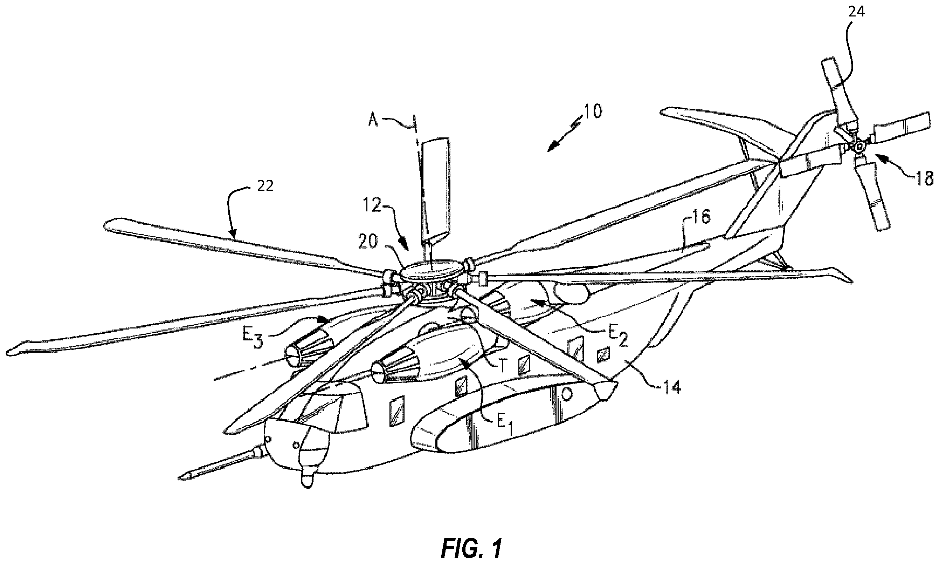

FIG. 1 schematically depicts an example of a rotary wing aircraft 10 having a main rotor assembly 12. The aircraft 10 includes an airframe 14 having an extending tail 16 which mounts a tail rotor system 18, such as an anti-torque system, a translational thrust system, a pusher propeller, a rotor propulsion system, and the like. The main rotor assembly 12 includes a plurality of rotor blade assemblies 22 mounted to a rotor hub 20. The main rotor assembly 12 is driven about an axis of rotation A through a main gearbox (depicted schematically at T) by one or more engines E. Although a particular helicopter configuration is depicted and described in the disclosed embodiment, other configurations and/or machines, such as high speed compound rotary wing aircraft with supplemental translational thrust systems, dual contra-rotating, coaxial rotor system aircraft, tilt-rotors and tilt-wing aircraft, and fixed-wing aircraft, will also benefit from embodiments of the invention.

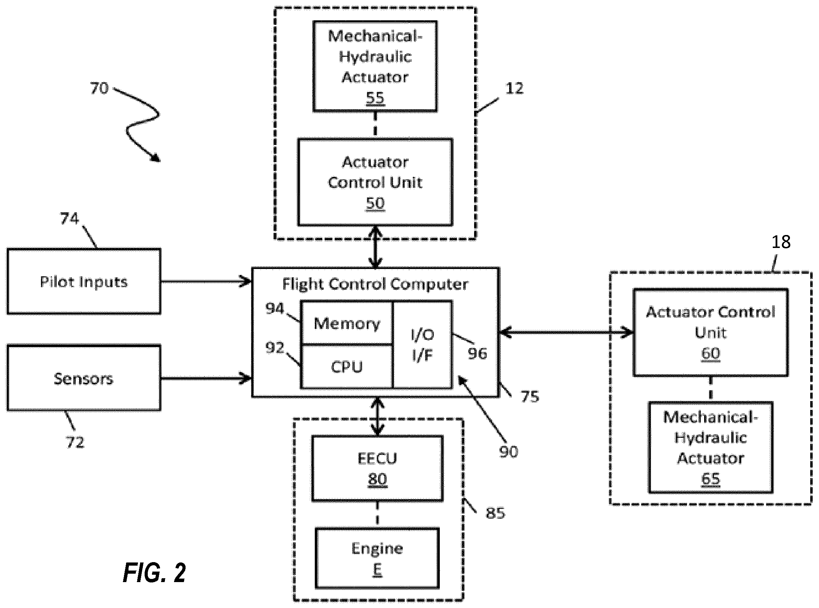

Portions of the aircraft 10, such as the main rotor system 12 and the tail rotor system 18 for example, are driven by a flight control system 70 depicted in FIG. 2. In one embodiment, the flight control system 70 is a fly-by-wire (FBW) control system. In an FBW control system, there is no direct mechanical coupling between a pilot's controls and movable components or control surfaces, such as rotor blade assemblies 20 or propeller blades 24 for example, of the aircraft 10 of FIG. 1. Instead of using mechanical linkages, an FBW control system includes a plurality of sensors 72 which can sense the position of controlled elements and generate electrical signals proportional to the sensed position. The sensors 72 may also be used directly and indirectly to provide a variety of aircraft state data to a flight control computer (FCC) 75. The FCC 75 may also receive pilot inputs 74 as control commands to control the lift, propulsive thrust, yaw, pitch, and roll forces and moments of the various control surfaces of the aircraft 10.

In response to inputs from the sensors 72 and pilot inputs 74, the FCC 75 transmits signals to various subsystems of the aircraft 10, such as the main rotor system 12 and the tail rotor system 18. The FCC 75 can use reference values in the pilot inputs 74 for feedforward control to quickly respond to changes in the reference values and can perform feedback control to reject disturbances detected via the sensors 72. Pilot inputs 74 can be in the form of stick commands and /or beeper commands to set and incrementally adjust reference values for controllers. The pilot inputs 74 need not be directly provided by a human pilot, but may be driven by an automatic pilot, a remote control, a navigation-based control, or one or more outer control loops configured to produce one or more values used to pilot the aircraft 10.

The main rotor system 12 can include an actuator control unit 50 configured to receive commands from the FCC 75 to control one or more actuators 55, such as a mechanical-hydraulic actuator, for the rotor blade assemblies 20 of FIGS. 1 and 2. In an embodiment, pilot inputs 74 including cyclic and/or collective commands may result in the actuator control unit 50 driving the one or more actuators 55 to adjust a swashplate assembly to control the rotor blade assemblies 20 of FIG. 1. Alternatively, the FCC 75 can directly control the one or more actuators 55, and the actuator control unit 50 can be omitted.

The tail rotor system 18 can include an actuator control unit 60 configured to receive commands from the FCC 75 to control one or more actuators 65, such as a mechanical-hydraulic actuator, associated with one or more propeller blades 24. In an embodiment, pilot inputs 74 include a propeller pitch command for the actuator control unit 60 to drive the one or more actuators 65 for controlling the propeller blades FIG. 1. Alternatively, the FCC 75 can directly control the one or more actuators 65, and the actuator control unit 60 can be omitted.

The FCC 75 can also interface with an engine control system 85 including one or more electronic engine control units (EECUs) 80 to control the engines E. Each EECU 80 can be a digital electronic control unit such as Full Authority Digital Engine Control (FADEC) electronically interconnected to a corresponding engine E. Each engine E can include one or more instances of the EECU 80 to control engine output and performance. Engines E can be commanded in response to the pilot inputs 74, such as a throttle command.

Rather than simply passing pilot inputs 74 through to various control units 50, 60, and 80, the FCC 75 includes a processing system 90 that applies models and control laws to augment commands. The processing system 90 includes processing circuitry 92 (i.e., a processor or processing device), memory 94, and an input/output (I/O) interface 96. The processing circuitry 92 can be any type or combination of computer processors, such as a microprocessor, microcontroller, digital signal processor, application specific integrated circuit, programmable logic device, and /or field programmable gate array, and is generally referred to as central processing unit (CPU) 92. The memory 94 can include volatile and non-volatile memory, such as random access memory (RAM), read only memory (ROM), or other electronic, optical, magnetic, or any other computer readable storage medium onto which data and control logic as described herein are stored. Therefore, the memory 94 is a tangible storage medium where instructions executable by the processing circuitry 92 are embodied in a non-transitory form. The I/O interface 96 can include a variety of input interfaces, output interfaces, communication interfaces and support circuitry to acquire data from the sensors 72, pilot inputs 74, and other sources (not depicted) and can communicate with the control units 50, 60, 80, and other subsystems (not depicted).

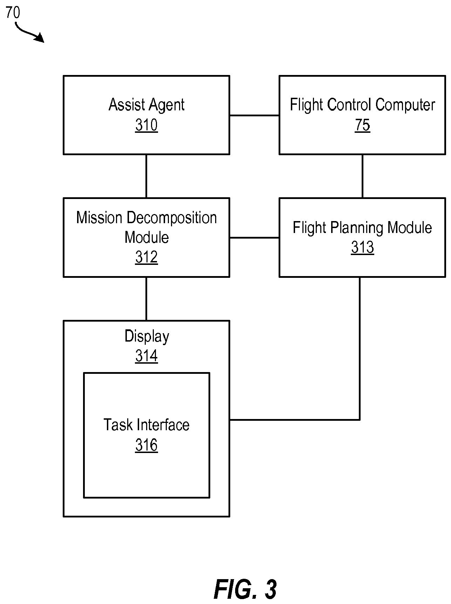

Turning now to FIG. 3, an example of the flight control system 70 includes an assist agent 310, a mission decomposition module 312, a flight planning module 313, and a display 314 to display a task interface 316 according to aspects of the present disclosure. The assist agent 310 performs tasks that can be allocated to the assist agent. In examples, the assist agent 310 may be an automatic pilot system, a remote control, a navigation-based control, one or more outer control loops configured to produce one or more values used to pilot the aircraft 10, or another autonomous system for performing tasks of the mission.

The mission decomposition module 312 decomposes a mission into discrete tasks and allocates the tasks, such as to an operator or an assist agent (e.g., the assist agent 310). For example, in a flight mission, a heading and altitude change task may be allocated to the assist agent 310 and a cargo drop task may be allocated to an operator. In this example, the assist agent 310 performs the heading and altitude change and the operator performs the cargo drop task. It should be appreciated that other types of tasks and missions are possible. It should also be appreciated that tasks may have subtasks. For example, the task of dropping cargo allocated to the operator can include subtasks open cargo bay door, detach cargo restraints, release cargo, etc. Each of these subtasks can be allocated to operators and/or assist agents by the mission decomposition module 312.

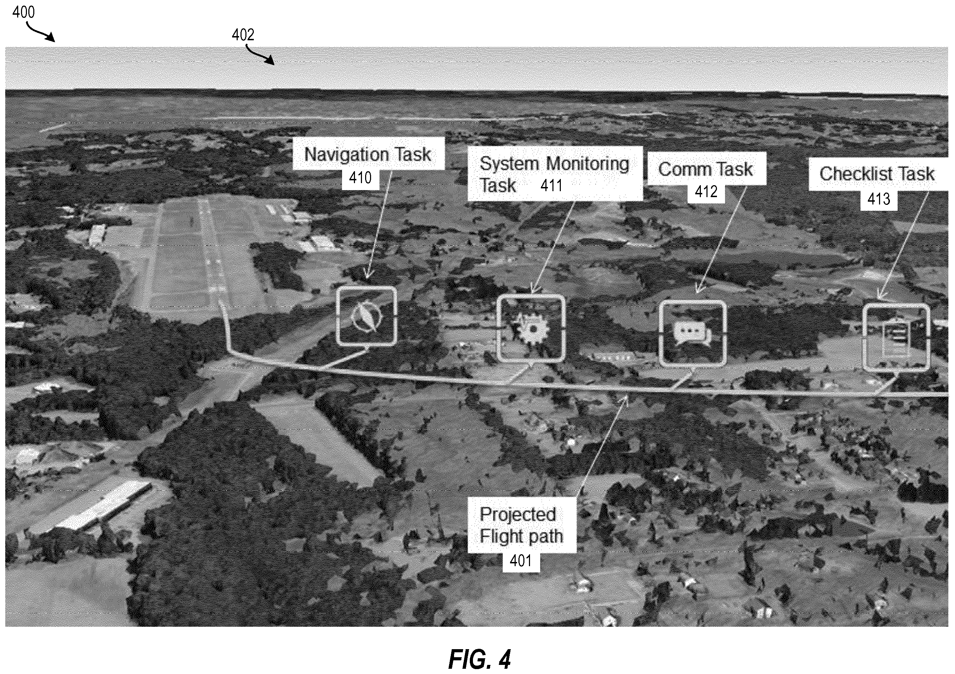

The display 314 displays the task interface 316 to a user or users. The display can include a screen, a heads-up display, a projected display, a head-mounted display unit, etc. and suitable combinations thereof. The task interface includes a flight plan overlaid on a map. The task interface also includes an indicium associated with a task. The indicium is positioned along the flight plan based at least in part on when the task is to be performed. FIGS. 4, 5, 6, 8, and 9 depict examples of interfaces (e.g., the task interface 316) according to aspects of the present disclosure.

In examples, the indicium associated with each task indicates information about the task. For example, indicia of colors may be used to indicate types of tasks (e.g., blue tasks are navigation tasks, green tasks communication tasks, red tasks are checklist tasks, etc.). In another example, indicia of colors may be used to indicate a status of the tasks (e.g., red tasks are incomplete, green tasks are complete, and blue tasks are pending). Other indicia may also be used, such as shapes, shading, line style, line weight, symbols, text, icons, etc. It should also be appreciated that multiple tasks may be scheduled to be executed simultaneously or concurrently, as indicated by multiple boxes occurring at the same point in time along the flight plan (i.e., a projected flight path).

The display 314 also may receive input from a user. For example, the display 314 may be a touch-sensitive display such that a user may provide input directly to the display 314. In another example, the user may use an input device (e.g., a mouse, a keyboard, a joystick, etc.) to provide input to the display 314. In examples, the input received from the user causes flight control system 70 to perform the task(s). In other examples, the user may interact with the display 314 to modify views and information presented on the display. For example, the user may scroll the display, use drop-and-drag to reposition/reallocate tasks, select a task for reallocation, select a task for additional details, and the like.

An example of a task interface 400 is depicted in FIG. 4. The interface 400 includes a projected flight path (i.e., a flight plan) 401 overlaid on a map 402. The indicia 410, 411, 412, 413 are positioned along the projected flight path 401 at positions representing approximately when the task is to be performed. In the example of FIG. 4, the indicia 410-413 are icons that represent different types of tasks to be performed. For example, the indicium 410 represents a navigation task, the indicium 411 represents a system monitoring task, the indicium 412 represents a communication task, and the indicium 413 represents a checklist task. It should be appreciated that these indicia and tasks are merely examples, and other types of indicia and types of tasks are possible.

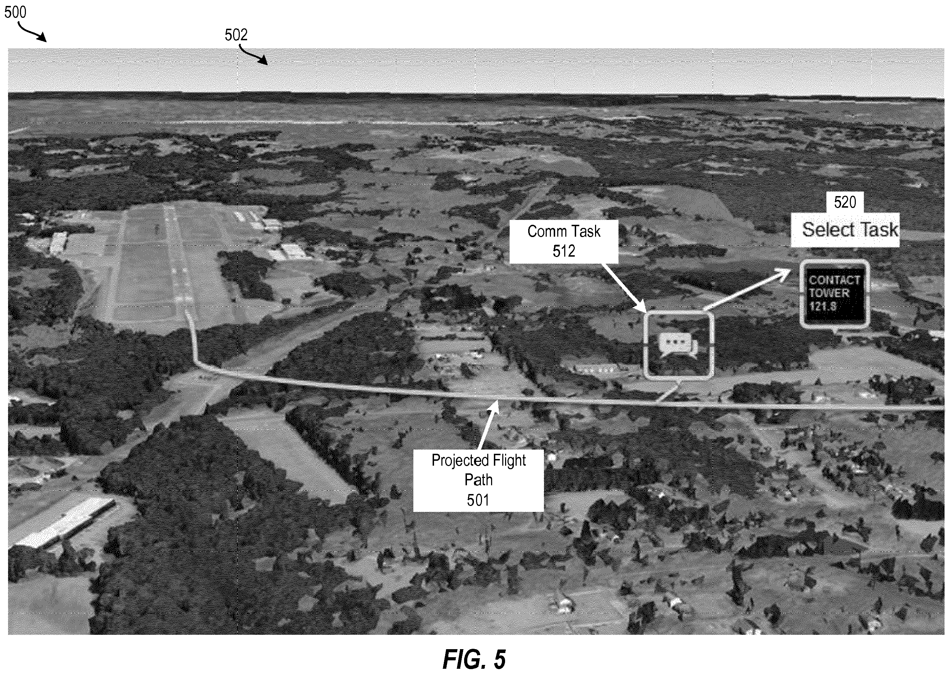

Another example of a task interface 500 is depicted in FIG. 5. The interface 500 includes a projected flight path 501 overlaid on a map 502. In this example, an indicium 512 represents a communication task. A user can select the communication task, such as by using an input device to select or "click" the indicium 512 to receive additional information about the task. In this case, when a user selects the communication task, a preview dialog 520 is presented that includes additional information about the task (e.g., "Contact tower 121.8"). This tells the user to contact the tower on frequency 121.8. In some examples, the preview dialog 520 may be automatically presented to the user, such as within a certain time period (e.g., 30 seconds, 90 seconds, etc.) before the task is to be performed.

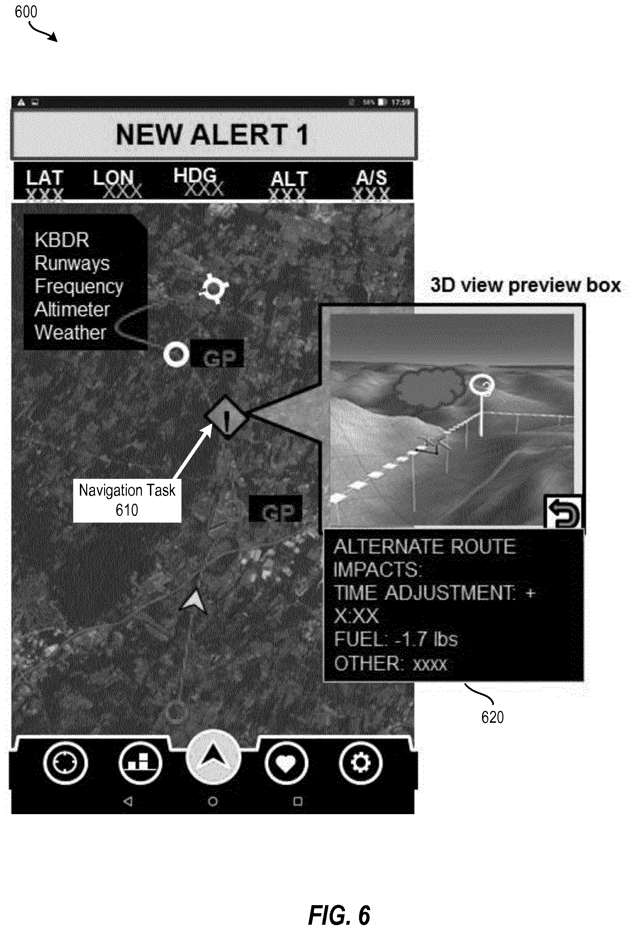

FIG. 6 depicts yet another example of a task interface 600. When the indicium 610 representing a navigation task is selected, a preview dialog 620 is presented to provide the user with additional information about the navigation task. For example, the preview dialog 620 for the indicium 610 can include alternative route information that includes impacts, time adjustment, fuel consumption, and other information. In addition, the task interface 600 can include information such as heading, positional information (e.g., latitude and longitude), altitude, and other information.

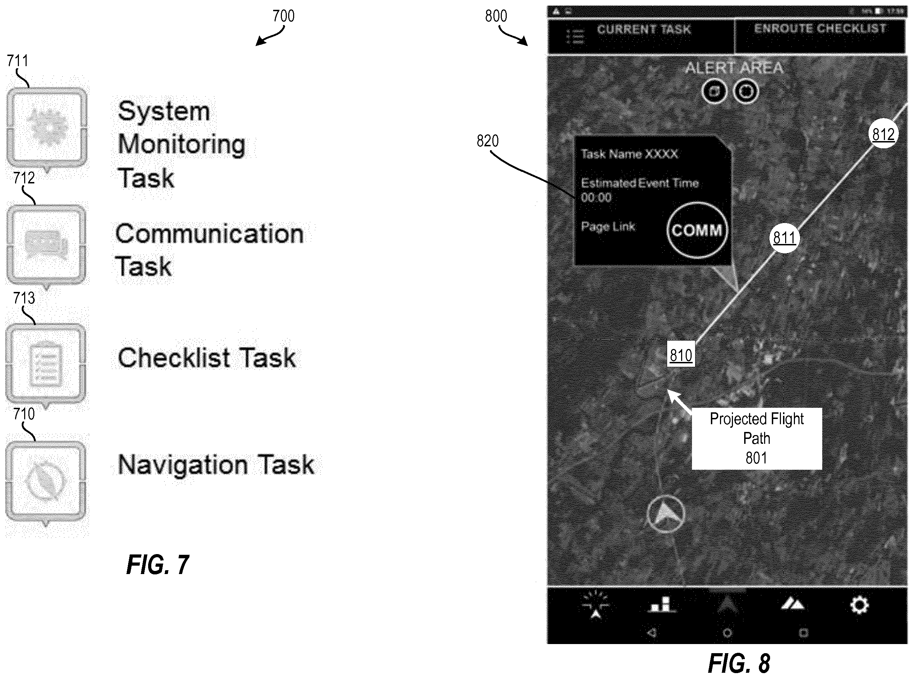

FIG. 7 depicts a diagram 700 of indicia 710, 711, 712, 713 for tasks according to aspects of the present disclosure. In the example of FIG. 7, each indicium is an icon indicative of the type of task, although another indicium (e.g., a color, a shape, etc.) can be used. In the example of FIG. 7, the indicium 710 represent a navigation task, the indicium 711 represents a system monitoring task, the indicium 712 represents a communication task, and the indicium 713 represents a checklist task.

FIG. 8 depicts yet another example of a task interface 800 that overlays a flight path 801 on a map with indicia positioned along the flight plan based on when a task is to be performed. The indicia depicted by a square (e.g., the indicium 810) represent one type of task (e.g. a navigation task), while the indicia depicted by a circle (e.g., the indicium 811, 812) represent another type of task (e.g., a communication task). The task interface 800 can also include a preview dialog 820 to provide additional information about a task to a user/operator.

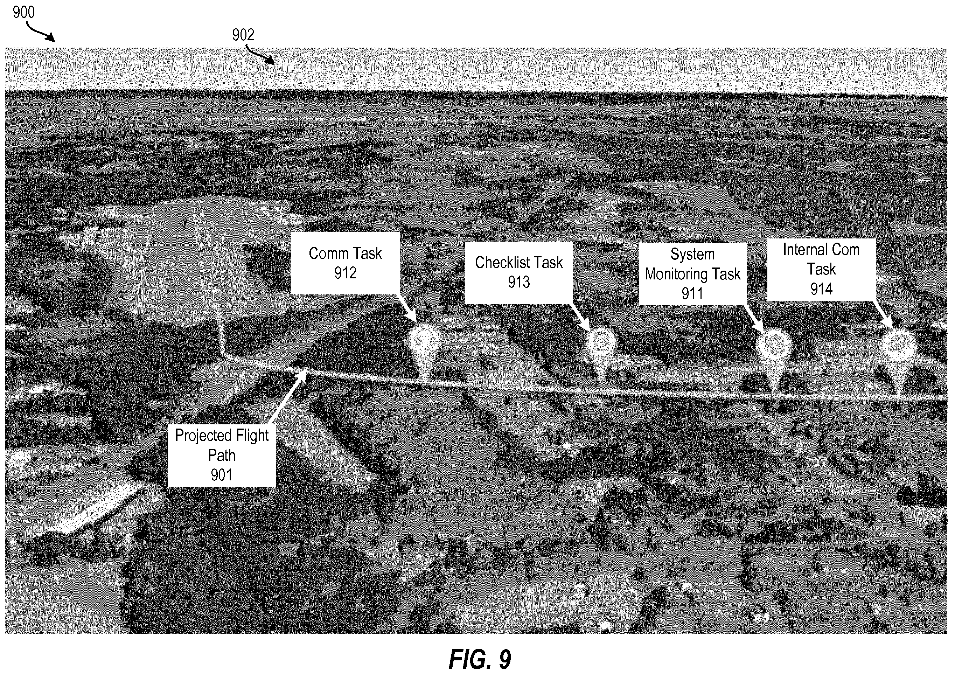

FIG. 9 depicts a diagram of an interface 900 according to aspects of the present disclosure. The interface 900 includes a projected flight path 901 overlaid on a map 902. A plurality of indicia representative of tasks are positioned along the flight path 901 at times when the tasks are expected to be performed or to occur. For example, a communication task indicia 912 (e.g., communicate with tower), a checklist task indicia 913 (e.g., perform landing checklist), a system monitoring task indicia 911 (e.g., check altitude, heading, and wind speed), and an internal communication task indicia 914 (e.g., announce landing) are included in the interface 900. These and other indicia are possible.

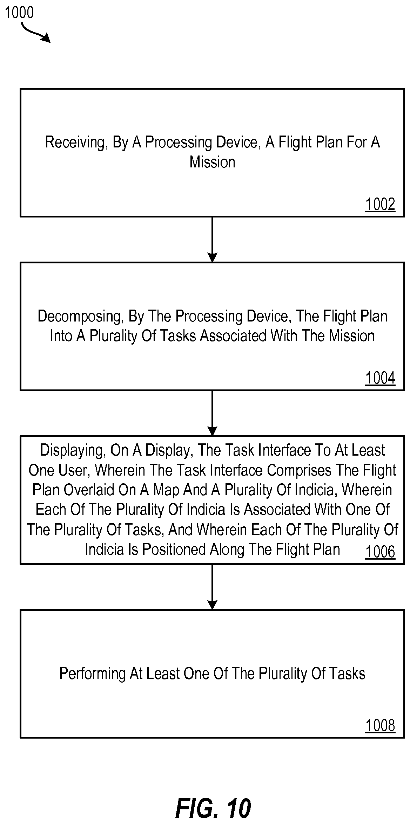

FIG. 10 depicts a flow diagram of a method for displaying an interface according to aspects of the present disclosure. The method 1000 can be performed, for example, by the flight control system 70 of FIG. 2.

At block 1002, the method 1000 includes receiving, by a processing device, a flight plan for a mission. At block 1004, the method 1000 includes decomposing, by the processing device, the flight plan into a plurality of tasks associated with the mission. At block 1006, the method 1000 includes displaying, on a display, the task interface to at least one user. The task interface includes the flight plan overlaid on a map and a plurality of indicia. Each of the plurality of indicia is associated with one of the plurality of tasks, and each of the plurality of indicia is positioned along the flight plan. This provides a contextual presentation of the tasks to a user. The indicia can be colors, shapes, or other visual representations. At block 1008, the method 100 includes performing at least one of the plurality of tasks. For example, the display can receive an input from the user, and the input causes a flight control system (e.g., the flight control system 70) to perform the task.

Additional processes also may be included, and it should be understood that the processes depicted in FIG. 10 represent illustrations, and that other processes may be added or existing processes may be removed, modified, or rearranged without departing from the scope and spirit of the present disclosure.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A processing system for displaying a task interface, the system comprising:
a mission decomposition module to decompose a mission into a plurality of tasks;
a flight planning module to generate a flight plan;
a display to display the task interface to at least one user, wherein the task interface comprises the flight plan overlaid on a map and an indicium associated with at least one of the plurality of tasks, and wherein the indicium is positioned along the flight plan based at least in part on when the at least one of the plurality of tasks is to be performed; and
a flight control system to execute the at least one of the plurality of tasks.

2. The processing system of claim 1, wherein the interface further comprises a plurality of indicia, each of the plurality of indicia being associated with one of the plurality of tasks.

3. The processing system of claim 1 or 2, further comprising at least one assist agent to perform tasks.

4. The processing system of claim 3, wherein the assist agent is an autopilot system.

5. The processing system of claim 3 or 4, wherein the mission decomposition module allocates the plurality of tasks between the at least one user and the at least one assist agent.

6. The processing system of one of claims 1-5, wherein the at least one of the plurality of tasks comprises a plurality of subtasks.

7. The processing system of one of claims 1-6, wherein the mission is a flight mission and wherein the processing system is located on an aircraft.

8. The processing system of one of claims 1-7, wherein the indicium is a color.

9. The processing system of one of claims 1-8, wherein the indicium is a shape.

10. The processing system of one of claims 1-9, wherein the display receives an input from the at least one user, and wherein the input causes the flight control system to perform the at least one of the plurality of tasks.

11. A computer-implemented method for displaying a task interface, the method comprising:
receiving, by a processing device, a flight plan for a mission.
decomposing, by the processing device, the flight plan into a plurality of tasks associated with the mission;
displaying, on a display, the task interface to at least one user, wherein the task interface comprises the flight plan overlaid on a map and a plurality of indicia, wherein each of the plurality of indicia is associated with one of the plurality of tasks, and wherein each of the plurality of indicia is positioned along the flight plan; and
performing at least one of the plurality of tasks.

12. The computer-implemented method of claim 11, wherein the plurality of indicia are colors.

13. The computer-implemented method of claim 11 or 12, wherein the plurality of indicia are shapes.

14. The computer-implemented method of one of claims 11-13, wherein the plurality of indicia are icons representative of the plurality of tasks.

15. The computer-implemented method of one of claims 11-14, wherein the mission is a flight mission and wherein the processing device is located on an aircraft.
